# FASCICULE DE BREVET EUROPEEN

(11) **EP 3 996 992 B1**
(45) Date de publication et mention de la délivrance du brevet: **21.02.2024**
(21) Numéro de dépôt: 20739364.6
(22) Date de dépôt: 10.07.2020
(51) Int. Cl.: B64C 25/10, B64C 25/60, B64C 25/50

(54) **ATTERRISSEUR AVEC VOILE DE RENFORT**
FAHRWERK MIT VERSTÄRKUNGSSTEG
LANDING GEAR WITH REINFORCING WEB

(30) Priorité: 12.07.2019 FR 1907847
(43) Date de publication de la demande: 18.05.2022
(73) Titulaire: Safran Landing Systems, 78140 Vélizy-Villacoublay (FR)
(72) Inventeur: DAULNY, Alexandre, 77550 Moissy-Cramayel (FR); BLANPAIN, Thierry, 77550 Moissy-Cramayel (FR); NGUYEN, Nicolas, 77550 Moissy-Cramayel (FR); COURTOIS DE LOURMEL, Yves, 77550 Moissy-Cramayel (FR)
(74) Mandataire: Lavialle, Bruno François Stéphane
(86) Numéro de dépôt international: PCT/EP2020/069618
(87) Numéro de publication internationale: WO 2021/009065

(56) Documents cités:
- EP-A1- 1 736 674
- EP-A1- 3 275 780
- EP-A2- 3 269 524
- WO-A1-2006/010890
- US-A1- 2008 230 650

## Description

### ARRIERE PLAN DE L'INVENTION

La présente invention concerne le domaine de l'aéronautique et plus particulièrement les trains d'atterrissage.

Un atterrisseur comprend des pièces structurelles agencées pour relier une roue à une structure d'un aéronef et pour supporter et amortir les efforts d'atterrissage. Chaque pièce structurelle comporte au moins deux interfaces de liaison à au moins une autre des pièces structurelles et à la structure de l'aéronef. Chaque pièce structurelle assure ainsi une transmission d'effort soit entre deux autres des pièces structurelles ou entre une autre des pièces structurelles et la structure de l'aéronef.

La principale pièce structurelle est le caisson. Le caisson comprend généralement un corps tubulaire formant le corps, ou l'interface, d'un amortisseur dont la tige coulisse dans ledit corps et comprend une extrémité libre non suspendue pourvue d'un essieu portant au moins une roue. De chaque côté du corps tubulaire s'étend une membrure comprenant une première plaque sensiblement horizontale et une deuxième plaque inclinée. La première et la deuxième plaque ont des extrémités solidaires du corps tubulaire et des extrémités qui se rejoignent et auxquelles sont fixés des paliers d'articulations définissant un axe d'articulation perpendiculaire au corps tubulaire. Dans l'espace triangulaire délimité par le corps tubulaire et les deux plaques de la membrure, s'étend une nervure qui vient rigidifier la membrure et sa liaison au corps tubulaire afin d'éviter qu'elle ne se déforme sous les efforts subis lors des atterrissages. Cette pièce structurelle, obtenue par usinage d'une pièce forgée ou d'une plaque laminée, est relativement lourde.

Le document EP 3 269 524 A2 concerne des structures connues de train d'atterrissage à peau mince.

### OBJET DE L'INVENTION

L'invention a notamment pour objet un atterrisseur ayant une structure plus légère, en répartissant autrement la matière dans le volume disponible, tout en étant résistante mécaniquement.

### RESUME DE L'INVENTION

A cet effet, on prévoit, selon l'invention telle que définie par la revendication 1 indépendante annexée, un atterrisseur comprenant des pièces structurelles agencées pour relier une roue à une structure d'un aéronef et pour supporter et amortir des efforts d'atterrissage, chaque pièce structurelle comportant au moins deux interfaces de liaison à au moins une autre des pièces structurelles ou à la structure de l'aéronef et au moins deux voiles qui s'étendent en regard l'un de l'autre en délimitant entre eux un espace libre et qui relient les deux interfaces pour transmettre les efforts d'atterrissage de l'une à l'autre.

Ainsi, dans une des pièces structurelles de l'atterrisseur de l'invention, au moins une partie des efforts est transmise d'une interface à l'autre par deux voiles s'étendant en regard l'un de l'autre. Cette pièce structurelle présente une répartition de la matière qui permet une réduction de masse par rapport à un atterrisseur traditionnel. La distance entre les voiles et leur épaisseur sera déterminée pour que la pièce structurelle ait une inertie et une rigidité adaptées aux efforts à encaisser dans un volume disponible alloué.

Selon un exemple ne faisant pas l'objet revendiqué, la pièce structurelle est un caisson de l'atterrisseur. Le caisson comprend un corps tubulaire ayant deux côtés opposés l'un à l'autre à partir de chacun desquels s'étend latéralement une paire de voiles qui se font face et qui convergent l'un vers l'autre pour se raccorder à un palier d'articulation du caisson à la structure de l'aéronef.

Le corps tubulaire forme l'interface de liaison à la tige de l'atterrisseur tandis que les paliers forment les interfaces de liaison à la structure de l'aéronef. Les voiles assurent la transmission des efforts entre ces interfaces. Le caisson ainsi formé est plus léger que le caisson de structure traditionnelle tout en pouvant être dimensionné pour présenter des caractéristiques mécaniques identiques. Selon un mode de réalisation de l'invention, la pièce structurelle est un élément de contreventement, l'une des deux interfaces comprend deux premiers paliers coaxiaux d'articulation de l'élément de contreventement à l'aéronef et les voiles ont une forme sensiblement triangulaire ayant deux sommets voisins des deux premiers paliers, et l'autre des interfaces comprend un deuxième palier d'articulation à une jambe de l'atterrisseur.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :
- la figure 1 est une vue en perspective d'un caisson d'atterrisseur selon un exemple ne faisant pas l'objet revendiqué ;
- la figure 2 est une vue de côté de ce caisson ;
- la figure 3 est une vue de dessus de ce caisson ;
- la figure 4 est une vue en perspective de ce caisson avec une coupe selon le plan IV de la figure 1 ;
- la figure 5 est une vue de ce caisson en coupe selon le plan V de la figure 1 ;
- la figure 6 est une vue agrandie de la partie centrale de la figure 3 ;
- la figure 7 est une vue en perspective d'un élément de contreventement selon l'invention ;
- la figure 8 est une vue en bout de cet élément de contreventement ;
- la figure 9 est une vue de cet élément de contreventement en coupe selon le plan IX de la figure 7 ;
- la figure 10 est une vue de cet élément de contreventement en coupe selon le plan IX de la figure 7.

### DESCRIPTION DETAILLEE DE L'INVENTION

Dans un exemple ne faisant pas l'objet revendiqué, un atterrisseur incorpore un caisson qui comprend un corps tubulaire formant le corps, ou le support, d'un amortisseur dont la tige coulisse dans ledit corps et comprend une extrémité libre pourvue d'un essieu portant des roues. De manière connue en elle-même le caisson est articulé à la structure de l'aéronef pour être mobile entre une position sortie utilisée pour les évolutions au sol de l'aéronef et une position rentrée dans une soute de l'aéronef, cette dernière position étant utilisée pour le vol de l'aéronef.

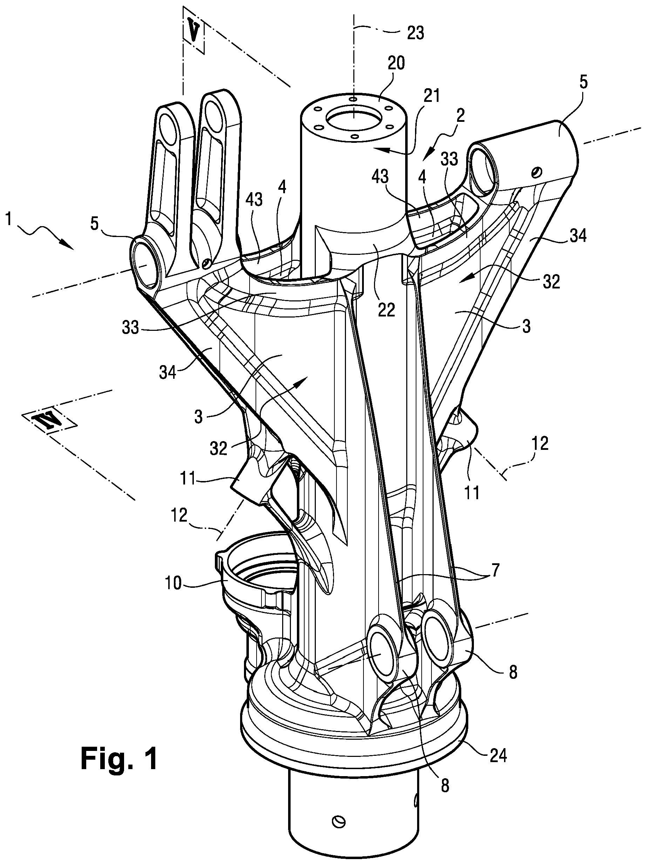

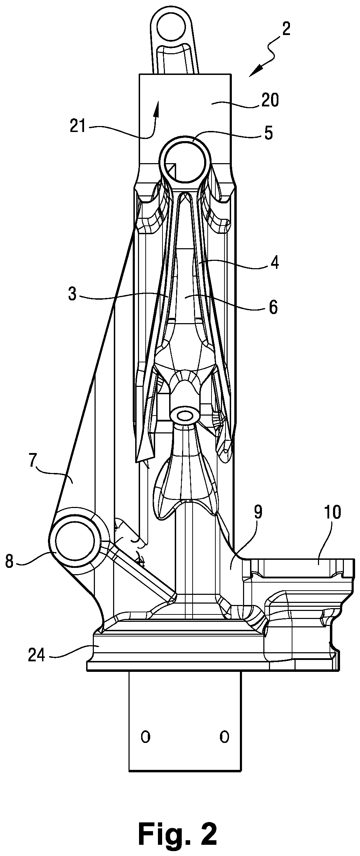

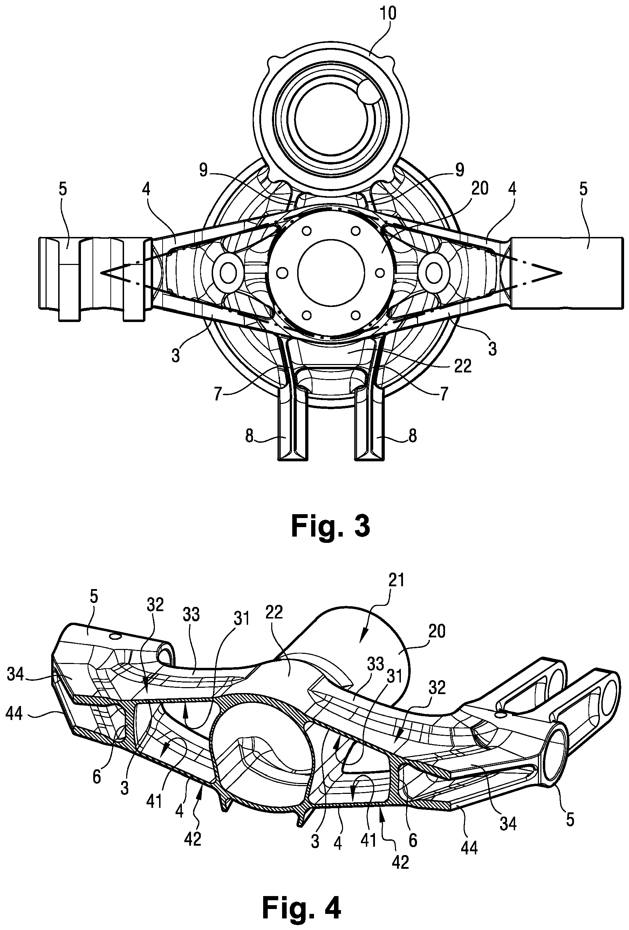

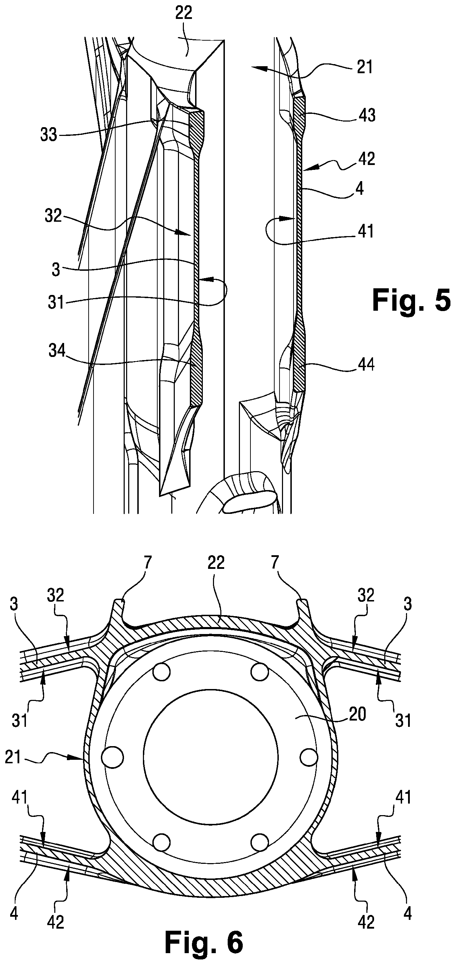

En référence aux figures 1 à 6, le caisson de l'atterrisseur, généralement désigné en 1, comprend un corps tubulaire, généralement désigné en 2, ayant deux côtés opposés l'un à l'autre à partir de chacun desquels s'étend latéralement une paire de voiles 3, 4 qui se font face et qui convergent l'un vers l'autre pour se raccorder à un palier 5 d'articulation du caisson 1 à la structure de l'aéronef. Le caisson 1 forme ainsi une interface de liaison à la tige de l'atterrisseur et les paliers 5 forment chacun une interface de liaison à la structure de l'aéronef.

Le corps tubulaire 2 comprend un manchon 20 ayant une surface extérieure 21 sensiblement cylindrique et au moins un massif 22 s'étendant en saillie de ladite surface extérieure 21. Le massif 22 s'étend parallèlement à un axe central 23 du manchon tubulaire 20 et symétriquement par rapport aux paires de voiles 3, 4. L'axe central 23 est perpendiculaire et coplanaire aux axes centraux des paliers 5.

Les voiles 3, 4 de chaque paire de voiles 3, 4 ont ici une forme sensiblement triangulaire avec un côté solidaire du corps tubulaire 2 et, à l'opposé, un sommet solidaire du palier 5. Les voiles 3, 4 de chaque paire de voiles 3, 4 ont donc deux côtés libres non reliés au corps tubulaire 2, à savoir un côté libre sensiblement horizontal et un côté libre oblique. Les voiles 3, 4 de chaque paire de voiles 3, 4 ont ainsi des surfaces internes 31, 41 qui sont écartées l'une de l'autre d'une distance diminuant depuis le corps tubulaire 2 jusqu'au palier 5, les voiles 3 et 4 de chaque paire de voiles 3, 4 convergeant vers le palier 5.

Le côté du voile 3 de chaque paire de voiles 3, 4 qui est solidaire du corps tubulaire 2 est relié audit massif 22 de sorte que la surface interne 31 du voile 3 tangente une enveloppe extérieure théorique du manchon 20 à l'aplomb du massif 22. Les surfaces extérieures 32 des voiles 3 s'étendent dans le prolongement l'une de l'autre.

Le côté du voile 4 de chaque paire de voiles 3, 4 solidaire du corps tubulaire 2 est relié au manchon 20 de sorte que la surface externe 42 du voile 4 tangente la surface extérieure 21 du manchon 20.

Le côté libre sensiblement horizontal et le côté libre oblique des voiles 3, 4 sont pourvus chacun d'une surépaisseur périphérique respectivement 33, 34, 43, 44. Cette surépaisseur 33, 34, 43, 44 qui s'étend le long de chaque côté libre des voiles 3, 4 a une fonction de raidissement des voiles 3, 4.

Le caisson 1 comprend une nervure 6 ayant deux bords opposés solidaires des voiles 3, 4 de chaque paire de voiles 3, 4 pour s'étendre transversalement à ceux-ci. La nervure 6 a une extrémité qui touche le palier 5 et une extrémité opposée rejoignant la surépaisseur 34, 44.

Le corps tubulaire 2 comprend une collerette externe 24 solidaire de l'extrémité inférieure du manchon 20 (inférieure lorsque le caisson 1, monté sur l'aéronef, est en position sortie comme représenté sur la figure 1). Le massif 22 touche la collerette 24.

Le caisson 1 comprend également deux premières nervures 7 en regard l'une de l'autre qui s'étendent en saillie du massif 22 du manchon 20, perpendiculairement à un plan général des voiles 3, 4 et parallèlement à l'axe central 23 du manchon 20. Les premières nervures 7 laissent entre elles un espace libre et relient un palier de contrefiche 8 au manchon 20 du corps tubulaire 20. Le palier de contrefiche 8 est ici en deux tronçons séparés, chaque première nervure 7 portant l'un des tronçons. Les premières nervures 7 ont une première extrémité reliée à la collerette externe 24 et, à l'opposé, une deuxième extrémité touchant les surépaisseurs 33 des voiles 3 au niveau de la jonction des voiles 3 au massif 22. Chaque première nervure 7 a, à l'opposé du manchon 20, un bord comprenant un premier tronçon incliné qui s'étend depuis la deuxième extrémité de la première nervure 7 au contact du massif 22 jusqu'au sommet du palier 8 (c'est-à-dire la portion de surface externe du palier 8 la plus éloignée de l'axe centrale 23 du manchon 20) et un deuxième tronçon incliné s'étendant depuis le sommet du palier 8 jusqu'à la première extrémité au contact de la collerette externe 24. On notera que le massif 22 contribue à rigidifier le manchon 20 et augmenter localement la résistance du manchon 20 à l'endroit où la contrefiche vient exercer des efforts sur celui-ci. Les premières nervures 7 assurent elles une répartition des contraintes sur toute la longueur du massif 22.

Le caisson 1 comprend deux deuxièmes nervures 9, en regard l'une de l'autre, qui s'étendent en saillie de la surface externe 21 du manchon 20 du corps tubulaire 2 perpendiculairement à un plan général des voiles 3, 4 en laissant entre elles un espace libre et qui relient un support 10 d'actionneur de direction au corps tubulaire 2. Les deuxièmes nervures 9 et le support 10 d'actionneur de direction sont reliés à la collerette externe 24. L'actionneur de direction, non représenté sur les figures, est ici un actionneur rotatif, par exemple un motoréducteur électrique, et le support 10 d'actionneur de direction est une bague appartenant au caisson 1 et ayant un axe central parallèle à l'axe central 23 du manchon 20 de manière que le motoréducteur accueilli dans le support 10 ait un axe de sortie parallèle à l'axe central 23. On notera que les voiles 3, 4 de chaque paire de voiles 3, 4 définissent avec le corps tubulaire 2 un logement pour le passage de conduits hydrauliques et/ou de câbles non représentés. Ces conduits hydrauliques et/ou câbles servent ici à l'alimentation de l'actionneur de direction. Plus particulièrement dans le cas de l'application de l'invention à un atterrisseur principal, ces conduits hydrauliques et/ou câbles peuvent servir au dispositif de freinage des roues de l'atterrisseur mais également à l'alimentation d'un moteur d'entraînement des roues en rotation, un tel moteur étant utilisé pour les manoeuvres de taxiage (ou « taxiing » en anglais) .

On comprend que l'utilisation de paires de nervures pour lier au manchon 20 le palier de contrefiche 8 et le support 10 permet de limiter le poids du caisson 1, les nervures de chaque paire de nervures laissant entre elles un espace dépourvu de matière.

Le caisson 1 comprend également deux douilles 11 traversant chacun une des nervures 6 et ayant un axe central 12 oblique par rapport à l'axe central 23 du manchon 20 du corps tubulaire 2. Les axes centraux 12 des douilles 11 et l'axe central 23 du manchon 20 du corps tubulaire 2 s'étendent dans un même plan médian du corps tubulaire 2. Les douilles 11 forment des interfaces de liaison à des bielles d'actionnement de portes entre deux positions par rapport à la structure de l'aéronef.

De préférence, le caisson 1 est obtenu par fabrication additive. Le dimensionnement du caisson pour qu'il supporte les efforts mis en jeu dans un atterrisseur est à la portée de l'homme du métier. Ainsi, l'écartement des voiles et leur épaisseur seront notamment définis en fonction du moment d'inertie souhaité.

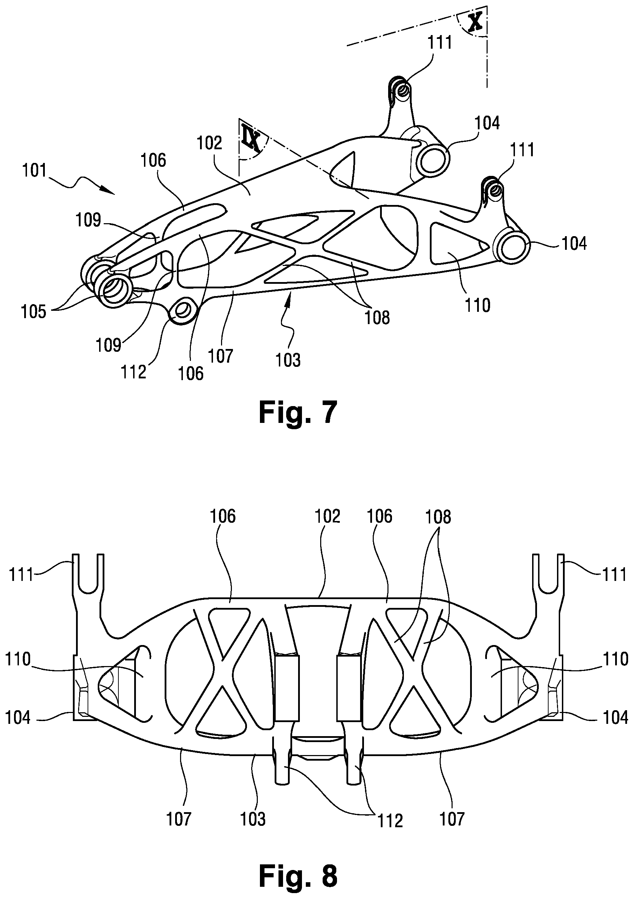

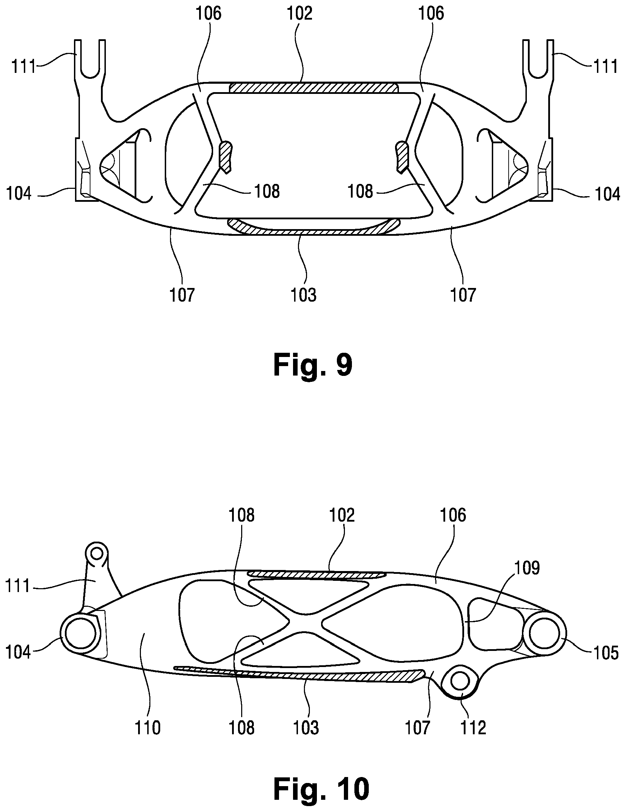

En référence aux figures 7 à 10, l'invention est décrite en application à un élément de contreventement.

L'élément de contreventement de l'atterrisseur, généralement désigné en 101, comprend une paire de voiles 102, 103 qui se font face et qui ont une forme sensiblement triangulaire avec deux sommets voisins chacun d'un premier palier 104 d'articulation de l'élément de contreventement 101 à la structure de l'aéronef et un troisième sommet voisin d'un deuxième palier 105. Les paliers 104 sont coaxiaux et le palier 105 est ici divisé en deux tronçons séparés.

L'élément de contreventement forme une pièce structurelle assurant une transmission d'effort entre les paliers 104 d'une part et 105 d'autre part qui forment des interfaces de liaison de l'élément de contreventement aux pièces qui l'entourent.

Chacun des voiles 102, 103 a deux côtés formés chacun par une poutre 106, 107 s'étendant entre l'un des premiers paliers 104 et le deuxième palier 105. Chaque poutre 106, 107 relie ainsi l'un des premiers paliers 104 et le deuxième palier 105.

Chaque poutre 106 de chaque voile 102 est relié à la poutre 107 de l'autre voile 103 se trouvant en regard par des traverses 108, 109. Chaque poutre 106 est ainsi reliée à la poutre 107 en regard par :
- deux traverses 108 qui sont inclinées par rapport aux poutres 106, 107 pour se croiser sensiblement en leurs milieux et qui sont liées entre elles en leurs milieux ;
- une traverse 109 qui est sensiblement perpendiculaire à la poutre 107 au voisinage du deuxième palier 105.

Les poutres 106, 107 ont des tronçons d'extrémité convergeant vers le premier palier 104. Lesdits tronçons d'extrémité en regard sont reliés l'un à l'autre par une portion de la paroi 110 qui se prolonge jusqu'au palier 104 en un point qui est écarté des points de liaison aux tronçons d'extrémité des poutres 106 et 107 selon l'axe d'articulation. La paroi 110 joue ainsi le rôle d'une nervure s'opposant :
- d'une part, à une modification de l'écartement entre les poutres 106, 107 en regard et,
- d'autre part, à une modification de l'angle de l'axe d'articulation du premier palier 104.

On notera que ledit tronçon d'extrémité de chacune des poutres 106 porte un levier d'actionnement 111 au voisinage du premier palier 104.

Chaque poutre 107 porte un troisième palier 112 au voisinage du point de liaison de la poutre 107 à la traverse 109.

De préférence, l'élément de contreventement 101 est obtenu par fabrication additive. Le dimensionnement de l'élément de contreventement 101 pour qu'il supporte les efforts mis en jeu dans un atterrisseur est à la portée de l'homme du métier. Ainsi, l'écartement des voiles et leur épaisseur seront notamment définis en fonction du moment d'inertie souhaité.

Bien entendu, l'invention n'est pas limitée au mode de réalisation décrit mais englobe toute variante entrant dans le champ de l'invention telle que définie par les revendications.

En particulier, bien que le caisson et l'élément de contreventement aient ici été décrits comme étant fabriqués en mettant en œuvre un procédé de fabrication additive, le caisson et l'élément de contreventement peuvent être fabriqués par tout moyen et par exemple par construction mécanosoudée ou par moulage.

Bien que le caisson et l'élément de contreventement aient ici été décrits comme étant d'une seule pièce, le caisson et l'élément de contreventement peuvent comprendre plusieurs parties assemblées les unes aux autres par exemple par soudage, boulonnage, collage, emmanchement à force...

Bien qu'ici le palier d'articulation de la contrefiche soit en deux parties, ce palier peut être en une seule partie. Bien que le support 10 soit ici agencé pour accueillir un actionneur de direction rotatif, le support 10 pourrait comprendre une douille d'axe perpendiculaire à l'axe central 23 pour accueillir un actionneur de direction linéaire.

La pièce structurelle peut avoir une des deux interfaces formées par deux premiers paliers coaxiaux d'articulation de la pièce structurelle à l'aéronef et les voiles ont une forme sensiblement triangulaire ayant deux sommets voisins des deux premiers paliers.

Le corps tubulaire 2 peut avoir d'autres formes que celle représentée : avec ou sans massif, ou un massif s'étendant sur toute ou partie de la longueur du manchon, ou deux massifs diamétralement opposés auxquels se raccordent les deux voiles de chaque paire de voiles ; avec ou sans collerette externe ; avec ou sans premières nervures, ou avec des premières nervures de forme différente ; avec ou sans deuxièmes nervures, ou avec des deuxièmes nervures de forme différente ; avec ou sans douille 11...

La surface interne 31 du voile 3 peut être espacée de l'enveloppe extérieure théorique du manchon 20 à l'aplomb du massif 22.

Plutôt que tangenter la surface extérieure 21 du manchon 20, les voiles 3, 4 pourrait intersecter ladite surface extérieure 21.

## Revendications

1. Atterrisseur comprenant des pièces structurelles agencées pour relier une roue à une structure d'un aéronef et pour encaisser des efforts d'atterrissage, chaque pièce structurelle comportant au moins deux interfaces de liaison à au moins une autre des pièces structurelles ou à la structure de l'aéronef et l'une des pièces structurelles (1, 101) est un élément de contreventement comportant au moins deux voiles (3, 4 ; 102, 103) qui s'étendent en regard l'un de l'autre en délimitant entre eux un espace libre et qui relient les deux interfaces pour transmettre les efforts de l'une à l'autre, l'une des deux interfaces comprenant deux premiers paliers (5 ; 104) coaxiaux d'articulation de ladite pièce structurelle (101), les voiles (102, 103) ayant une forme sensiblement triangulaire ayant deux sommets voisins des deux premiers paliers et l'autre des interfaces comprend un deuxième palier (105) d'articulation de l'élément de contreventement, **caractérisé en ce que** chacun des voiles (102, 103) a deux côtés formés par une poutre (106, 107) s'étendant entre l'un des premiers paliers (104) et le deuxième palier (105).

2. Atterrisseur selon la revendication 1, dans lequel chaque poutre (106, 107) de chaque voile (102, 103) est reliée à la poutre (107, 106) de l'autre voile (103, 102) se trouvant en regard par des traverses (108, 109).

3. Atterrisseur selon la revendication 2, dans lequel les traverses comprennent des traverses inclinées (108).

4. Atterrisseur selon la revendication 2 ou 3, dans lequel chaque poutre (106, 107) de chaque voile (102, 103) a un tronçon d'extrémité voisin du premier palier (104) et les tronçons d'extrémité des poutres en regard sont reliées l'une à l'autre par une paroi (110).

5. Atterrisseur selon l'une quelconque des revendications précédentes, dans lequel au moins l'un des voiles (3, 4) comprend une surépaisseur périphérique (33, 34, 43, 44) .

6. Atterrisseur selon l'une quelconque des revendications précédentes, comprenant une nervure (6) ayant deux bords opposés solidaires des voiles (3, 4) pour s'étendre transversalement à ceux-ci.

7. Atterrisseur selon l'une quelconque des revendications précédentes, dans lequel la pièce structurelle est obtenue par fabrication additive.

## Patentansprüche

1. Fahrwerk, umfassend strukturelle Teile, die ausgebildet sind, ein Rad mit einer Struktur eines Luftfahrzeugs zu verbinden und Landekräften standzuhalten, wobei jedes strukturelle Teil mindestens zwei Schnittstellen zur Verbindung mit mindestens einem anderen der strukturellen Teile oder mit der Struktur des Luftfahrzeugs umfasst, und wobei eines der strukturellen Teile (1, 101) ein Verstrebungselement ist, das mindestens zwei Scherwände (3, 4; 102, 103) umfasst, die sich einander gegenüberliegend erstrecken und dabei zwischen sich einen freien Raum begrenzen und die die beiden Schnittstellen verbinden, um die Kräfte von einer auf die andere zu übertragen, wobei eine der beiden Schnittstellen zwei erste koaxiale Lager (5; 104) zur Gelenkverbindung des genannten strukturellen Teils (101) umfasst, wobei die Scherwände (102, 103) eine im Wesentlichen dreieckige Form haben, mit zwei Spitzen, die an die beiden ersten Lager angrenzen, und die andere der Schnittstellen ein zweites Lager (105) zur Gelenkverbindung des Verstrebungselements umfasst, **dadurch gekennzeichnet, dass** jede der Scherwände (102, 103) zwei Seiten hat, die von einem Träger (106, 107) gebildet sind, der sich zwischen einem der ersten Lager (104) und dem zweiten Lager (105) erstreckt.

2. Fahrwerk nach Anspruch 1, bei dem jeder Träger (106, 107) jeder Scherwand (102, 103) mit dem Träger (107, 106) der anderen Scherwand (103, 102) verbunden ist, die sich durch Querträger (108, 109) gegenüberstehen.

3. Fahrwerk nach Anspruch 2, bei dem die Querträger geneigte Querträger (108) umfassen.

4. Fahrwerk nach Anspruch 2 oder 3, bei dem jeder Träger (106, 107) jeder Schwerwand (102, 103) einen Endabschnitt in der Nähe des ersten Lagers (104) hat und die Endabschnitte der gegenüberliegenden Träger miteinander durch eine Wand (110) verbunden sind.

5. Fahrwerk nach einem der vorhergehenden Ansprüche, bei dem mindestens eine der Schwerwände (3, 4) eine periphere Überdicke (33, 34, 43, 44) umfasst.

6. Fahrwerk nach einem der vorhergehenden Ansprüche, umfassend eine Rippe (6), die zwei entgegengesetzte Ränder hat, die fest mit den Scherwänden (3, 4) verbunden sind, um sich quer zu diesen zu erstrecken.

7. Fahrwerk nach einem der vorhergehenden Ansprüche, bei dem das strukturelle Teil durch additive Fertigung erhalten wird.

## Claims

1. A landing gear comprising structural parts arranged to connect a wheel to a structure of an aircraft and to withstand landing forces, each structural part comprising at least two interfaces connecting to at least one other of the structural parts or to the structure of the aircraft, and one of the structural parts (1, 101) is a brace element comprising at least two webs (3, 4; 102, 103) which extend so as to face one another while delimiting between them a free space and which connect the two interfaces in order to transmit the forces from one to the other, one of the two interfaces comprising two first coaxial articulation bearings (5; 104) for articulating said structural part (1, 101), the webs (3, 4; 102, 103) having substantially triangular in shape, having two vertices adjacent to the two first bearings, and the other of the interfaces comprises a second articulation bearing (105) for articulating the brace element, **characterized in that** each of the webs (102, 103) has two sides formed by a beam (106, 107) extending between one of the first bearings (104) and the second bearing (105).

2. A landing gear according to claim 4, wherein each beam (106, 107) of each web (102, 103) is connected to the beam (107, 106) of the other web (103, 102) facing it by crossmembers (108, 109).

3. A landing gear according to claim 5, wherein the crossmembers comprise inclined crossmembers (108).

4. A landing gear according to claim 5 or 6, wherein each beam (106, 107) of each web (102, 103) has an end section in the vicinity of the first bearing (104) and the end sections of the beams facing each other are connected together by a wall (110).

5. A landing gear according to any preceding claim, wherein at least one of the webs (3,4) comprises a peripheral extra thickness (33, 34, 43, 44).

6. A landing gear according to any preceding claim, comprising a rib (6) having two opposite edges secured to the webs (3, 4) so as to extend transversely thereto.

7. A landing gear according to any preceding claim, wherein the structural part is obtained by additive manufacturing. the other.
